# EUROPEAN PATENT SPECIFICATION

(11) **EP 2 113 959 B1**
(45) Date of publication and mention of the grant of the patent: **29.05.2013**
(21) Application number: 09156899.8
(22) Date of filing: 31.03.2009
(51) Int. Cl.: H01M 8/04, H01M 8/06

(54) **Fuel cell system and control method thereof**
Brennstoffzellensystem und Steuerungsverfahren dafür
Système de pile à combustible et son procédé de commande correspondant

(30) Priority: 25.04.2008 KR 20080038540; 28.04.2008 KR 20080039464
(43) Date of publication of application: 04.11.2009
(73) Proprietor: Samsung Electronics Co., Ltd., Suwon-si, Gyeonggi-do, 443-742 (KR)
(72) Inventor: Heo, Jin S., Gyeonggi-do (KR); Lee, Hyun Chul, Gyeonggi-do (KR); Higashi, Takami, Gyeonggi-do (KR)
(74) Representative: Grünecker, Kinkeldey, Stockmair & Schwanhäusser

(56) References cited:
- EP-A- 2 081 246
- DE-A1-102007 023 376
- JP-A- 6 275 299
- JP-A- 2006 179 346
- JP-A- 2008 004 516
- US-A1- 2003 118 883

## Description

### BACKGROUND

### 1. Field

The present invention relates to a fuel cell system and a control method thereof. More particularly, the present invention relates to a fuel cell system and a control method thereof, capable of rapidly and effectively raising the temperature of a stack of the fuel cell system until the stack of the fuel cell system can be normally operated, by heating the stack of the fuel cell system by the circulation of a heat medium heated by heat generated from a fuel processor.

### 2. Description of the Related Art

In general, a fuel cell system obtains electric and thermal energy through an electrochemical reaction, such as an oxidation-reduction reaction. Reserves of fossil energy, such as petroleum and coal, are limited. In addition, various pollutants are generated when using fossil energy, thereby causing a problem of environmental pollution.

The fuel cell system generates electric energy and thermal energy by performing an electrochemical reaction at high efficiency, so the fuel cell system is spotlighted as an alternative energy source capable of solving the problems of energy depletion and environmental pollution.

As disclosed in Korean Patent Application Nos. 1998-0016383 and 2003-0047158, the fuel cell system includes a fuel supply unit, a fuel processor, a stack and a cooling liquid supply unit.

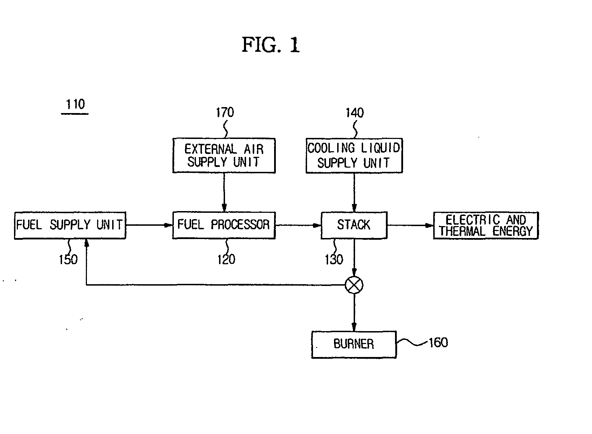

Hereinafter, the operation of the conventional fuel cell system will be described in detail with reference to FIG. 1.

The conventional fuel cell system 110 includes a fuel supply unit 150 which supplies CH-based fuel, such as LNG, LPG and kerosene, to a fuel processor 120.

The fuel processor 120 allows the fuel, which is desulfurized, to be subject to reforming and CO removal processes. As the fuel undergoes the above processes, the fuel is shifted into gas mainly including hydrogen with a low content of CO (carbon monoxide). The gas is mixed with external air, thereby forming reforming gas. The reforming gas is supplied to a stack 130.

The stack 130 can be prepared by stacking a plurality of single cells which are subject to the electrochemical reaction. The single cell is an MEA (membrane-electrode assembly) in which an anode and a cathode are disposed about an electrolyte layer. The anode dissolves hydrogen into a hydrogen ion and an electron by using a catalyst, thereby generating electricity and the cathode combines the hydrogen ion with the electron, thereby producing water.

A cooling liquid supply unit 140 supplies cooling liquid to cooling plates inserted between the single cells in order to dissipate heat, which is generated in the process of the electrochemical reaction, out of the stack 130.

Meanwhile, since the chemical reaction may not be actively performed for a predetermined period of time from an initial operation of the fuel cell system 110, components of the fuel cell system 110 may not reach the temperature suitable for the normal operation. Since the temperature for the normal operation of the components may vary depending on the components, the components requiring the higher temperature for the normal operation may not be normally operated even if some components are normally operated at the relatively low temperature.

For instance, a reformer (not shown) of the fuel processor 120 can effectively generate gas at the relatively low temperature, but a shift reactor (not shown) of the fuel processor 120 may not normally operate at the relatively low temperature, so that CO is not effectively removed.

In this case, gas that has passed through the shift reactor includes about 75% hydrogen and about 5% CO. If the gas containing about 5% CO is supplied to the stack 130, the stack 130 may be damaged. Thus, the gas may not be used as reforming gas even if the gas contains about 75% useful hydrogen. For this reason, the gas is supplied to a combustion burner 160 or the fuel supply unit 150 such that the gas is burnt until the reforming gas containing CO less than a predetermined level can be generated. An external air supply unit 170 supplies external air to the fuel processor 120.

However, the conventional fuel cell system requires much time to reach the temperature suitable for the normal operation from the initial operation thereof.

In order to solve this problem, there has been suggested a method for increasing the temperature of the fuel cell system by heating the fuel cell system using an electric heater.

However, according to this method, the fuel cell system must be heated for a long time, so that a great amount of electric energy is consumed, resulting in a high operating cost.

Post-published EP 2 081 246 discloses a fuel cell and control method thereof.

### SUMMARY

Accordingly, it is an aspect of the present invention to provide a fuel cell system and a control method thereof, capable of rapidly and effectively raising the temperature of a stack of the fuel cell system until the stack of the fuel cell system can be normally operated by heating the stack of the fuel cell system through the circulation of a heat medium heated by heat generated from a fuel processor.

Additional aspects and/or advantages will be set forth in part in the description which follows and, in part, will be apparent from the description, or may be learned by practice of the invention.

The invention provides a method of controlling a fuel cell system according to claim 1.

The foregoing and/or other aspects of the present invention are achieved by providing a method of controlling a fuel cell system including a fuel processor to generate reforming gas and a stack to generate energy by receiving the reforming gas from the fuel processor. The method includes the operations of performing an initial operation, comprising operating the fuel processor to generate thermal energy, heating a heat medium by the generated thermal energy, and raising a temperature of the stack to a normal operation temperature comprising heating the heat medium to a high temperature, and performing a normal operation, comprising supplying the reforming gas to the stack after the temperature of the stack has reached the normal operation temperature.

The performing the initial operation includes supplying the heat medium having the high temperature to the stack, and heating the stack comprising circulating the heat medium through a circulation heating circuit provided between the fuel processor and the stack.

The heat medium having the high temperature comprises directly supplying the heat medium to a cooling plate of the stack.

The heat medium having the high temperature is supplied to a cooling plate of the stack through a cooling liquid reservoir provided in the stack.

The supplying comprises simultaneously supplying the heat medium to a cooling plate of the stack and providing a cooling liquid reservoir.

The heat medium passes through a heat exchanger of the fuel processor such that the heat medium is heated and then supplying the heat medium to the stack after a temperature of a reformer provided in the fuel processor has reached an operation start temperature thereof.

The supplying the heat medium is performed after the draining.

Stopping the supplying of the heat medium to the stack occurs if an amount of the heat medium supplied to the stack reaches an upper limit of a receiving capacity of the stack.

Draining a part of the heat medium stored in the stack occurs if an amount of the heat medium supplied to the stack reaches an upper limit of a receiving capacity of the stack.

The supplying the heat medium and starting the heating the stack if a temperature of a shift reactor provided in the fuel processor reaches a preset temperature of the shift reactor.

The preset temperature of the shift reactor is 100°C.

The circulating may comprise repulsively circulating the heat medium through the circulation heating circuit.

The circulating may comprise circulating the heat medium through the circulation heating circuit due to thermosyphon phenomenon.

Supplying fuel is supplied to the fuel processor and reforming gas generated by the fuel processor is supplied to a burner of the fuel processor.

The reforming gas is supplied to the stack after stopping the heating of the stack through circulation of the heat medium and supplying the reforming gas to the burner if a temperature of the stack exceeds a proper operation temperature of the stack.

The fuel processor is provided with a reformer, and the heat medium having a normal temperature is supplied to the reformer to adjust a temperature of the reformer when the temperature of the reformer is higher than an operation limit temperature of the reformer.

The fuel processor is provided with a reformer, and the heat medium heated through a heat exchanger of the fuel processor is supplied to the reformer to adjust a temperature of the reformer when the temperature of the reformer is higher than an operation limit temperature of the reformer.

The heat medium includes water.

The fuel processor includes a reformer, a carbon monoxide (CO) remover, and a shift reactor, the method further comprising heating the heat medium by at least one of thermal energy generated from the reformer and a thermal energy generated from the CO remover.

Supplying gas generated from the reformer and the shift reactor is supplied to the CO remover together with air to operate the CO remover, and thermal energy generated from the CO remover to a heat exchanger of the fuel processor in the second operation.

The foregoing and/or other aspects, of the present invention are achieved by providing a fuel cell system including a fuel processor to generate a reforming gas, a stack to generate energy by receiving the reforming gas from the fuel processor, and a circulation heating circuit provided between the fuel processor and the stack to raise a temperature of the stack using heat generated from the fuel processor in an initial operation, wherein the circulation heating circuit includes a cooling plate fluid path to supply a heat medium from the fuel processor to the stack, and a circulation fluid path to returne the heat medium from the stack to the fuel processor.

The fuel processor comprises a heat exchanger and the stack comprises a cooling plate and the cooling plate fluid path is formed between the heat exchanger and the cooling plate.

The fuel processor comprises a heat exchanger and the stack comprises a liquid cooling liquid reservoir and the cooling plate fluid path is formed between the heat exchanger and the cooling liquid reservoir.

The fuel processor comprises a heat exchanger and the stack comprises a liquid cooling unit and a cooling liquid reservoir and the cooling plate fluid path is formed between the heat exchanger and the cooling plate provided in the stack and between the heat exchanger and the cooling liquid reservoir.

A first valve is installed in the cooling plate fluid path to control supply of the heat medium, and a second valve is installed in the circulation fluid path to control circulation of the heat medium.

A drain pipe extending to an exterior is connected to a cooling plate provided in the stack to drain the heat medium stored in the cooling plate, and a valve is installed in the drain pipe to control drainage of the heat medium.

The fuel processor comprises a reformer, and the reformer comprises a first fluid path to supply the heat medium having a normal temperature to the reformer and a second fluid path which branches from the cooling plate fluid path to supply the heat medium having a high temperature to the reformer.

The fuel processor includes a heat exchanger and a carbon monoxide (CO) remover to reduce a content of CO, and thermal energy generated from the CO remover is supplied to the heat exchanger.

At least one outer surface of the CO remover makes surface-contact with at least one outer surface of the heat exchanger and the thermal energy is supplied from the CO remover to the heat exchanger through a surface-contact part between the CO remover and the heat exchanger.

The fuel cell system and the control method thereof according to the embodiments of the present invention can rapidly and effectively raise the temperature of the stack of the fuel cell system until the stack of the fuel cell system can be normally operated by heating the stack of the fuel cell system through the circulation of the heat medium heated by heat generated from the fuel processor.

In addition, the fuel cell system and the control method thereof according to the embodiments of the present invention can rapidly and effectively raise the temperature of the stack of the fuel cell system until the stack of the fuel cell system can be normally operated by heating the stack of the fuel cell system using the heat medium heated by thermal energy generated from the CO remover.

Further, the fuel cell system and the control method thereof according to the embodiments of the present invention can rapidly raise the temperature of the stack of the fuel cell system by supplying the stack with hot water generated during the initial operation.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a block view showing the structure of a conventional fuel cell system;
FIG. 2 is a schematic view showing the structure of a fuel cell system according to a first embodiment of the present invention;
FIGS. 3A and 3B are flowcharts showing a control method of the fuel cell system shown in FIG. 2;
FIG. 4 is a schematic view showing the structure of a fuel cell system according to a second embodiment of the present invention;
FIG. 5 is a schematic view showing the structure of a fuel cell system according to a third embodiment of the present invention; and
FIG. 6 is a schematic view showing the structure of a fuel cell system according to a fourth embodiment of the present invention.

### DETAILED DESCRIPTION OF EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

Reference will now be made in detail to the embodiments, examples of which are illustrated in the accompanying drawings, wherein like reference numerals refer to the like elements throughout. The embodiments are described below to explain the present invention by referring to the figures.

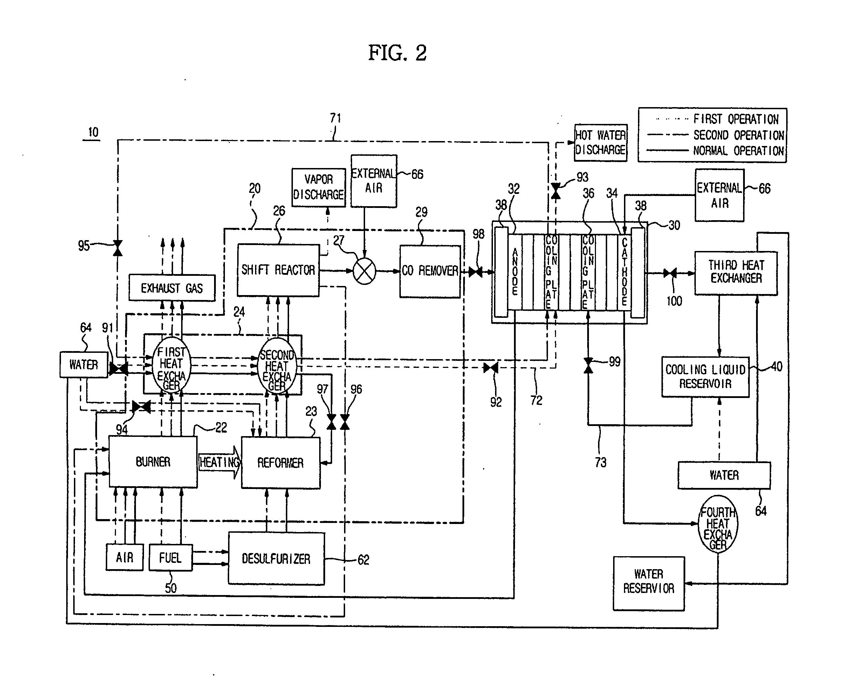

FIG. 2 is a schematic view showing the structure of a fuel cell system according to a first embodiment of the present invention.

As shown in FIG. 2, the fuel cell system 10 according to the first embodiment of the present invention includes a fuel processor 20 performing the reforming reaction, a stack 30 generating electricity, a cooling liquid reservoir 40 storing cooling liquid, a circulation heating circuit 71 provided between a heat exchanger 24 of the fuel processor 20 and a cooling plate 36 of the stack 30, and a cooling plate fluid path 72 supplying hot water heated by the heat exchanger 24 to the cooling plate 36.

The fuel processor 20 converts a CH-based fuel 50 into reforming gas mainly including hydrogen through the reforming reaction. The fuel processor 20 includes a burner 22, a reformer 23, a shift reactor 26, a mixer 27 and a CO remover 29.

The burner 22 generates heat by burning the CH-based fuel 50, such as LNG, LPG or kerosene. The heat generated from the burner 22 is supplied to the reformer 23 to promote the reforming reaction.

The reformer 23 is heated by the burner 22 to perform the reforming reaction. When the fuel cell system 10 is initially operated, air and the fuel 50 are supplied to the burner 22 to ignite the burner 22. The ignited burner 22 heats the reformer 23 such that temperature of the reformer 23 reaches the operation start temperature of 300°C. In this case, in order to operate the burner 22 to heat the reformer 23, most valves installed in the fuel cell system 10, except for an essential valve, are closed. Thus, the heat generated from the burner 22 can be completely used to heat the reformer 23. If a first operation (shown in a dotted line) of the initial operation starts at the operation start temperature of the reformer 23, a first valve 91 is open so that deionized (DI) water 64 passes through the heat exchanger 24. The DI water 64 is heated while passing through the heat exchanger 24 and then supplied to the cooling plate 36 of the stack 30 through the cooling plate fluid path 72, thereby heating the stack 30. At the same time, the burner 22 continuously heats the reformer 23 such that the temperature of the reformer 23 reaches the operation limit temperature of 500°C. The reformer 23 may represent optimal performance in the temperature range between the operation limit temperature and the operation start temperature. In order to allow the reformer 23 to be maintained in an optimum temperature range, if the temperature of the reformer 23 exceeds the operation limit temperature, a fourth valve 94 is open to supply the water 64 to the reformer 23. If the fourth valve 94 is open, the water 64 having the normal temperature is supplied to the reformer 23 so that the increase in the temperature of the reformer 23 can be restricted. The water supplied to the reformer 23 through the fourth valve 94 is converted into vapor having the high temperature by absorbing heat from the reformer 23. The high temperature vapor is supplied to the shift reactor 26 to increase the temperature of the shift reactor 26 and then discharged to the exterior. The fourth valve 94 is frequently opened/closed under the control of a controller (not shown) during the initial operation of the fuel cell system 10 in order to maintain the temperature of the reformer 23 within a predetermined range.

The shift reactor 26 receives gas mainly including hydrogen and reduces a composition ratio of CO contained in the gas. The gas supplied from the reformer 23 may include about 75% hydrogen, about 15% CO₂, and about 5% CO. The following reaction is performed in the shift reactor 26.

CO + H₂O ↔ CO₂ + H₂

If the temperature of the shift reactor 26 is within the normal operation range, the forward reaction is activated, so the content of CO is reduced to about 0.5%. For the purpose of normal operation, the shift reactor 26 receives heat from thermal by-products including vapor generated due to the high-temperature reformer 23 in such a manner that the shift reactor 26 is heated up to 100°C, that is the preset temperature of the shift reactor 26. If the temperature of the shift reactor 26 is higher than the preset temperature of the shift reactor 26, the water 64 and the fuel 50 processed through a desulfurizer 62 are supplied to the reformer 23 to perform the reforming reaction in the reformer 23. As the reforming reaction is performed in the reformer 23, gas generated from the reformer 23 is supplied to the shift reactor 26. Meanwhile, if the temperature of the stack 30 does not reach the proper operation temperature of the stack 30 even though the gas is generated from the reformer 23 through the reforming reaction, a sixth valve 96 is open to perform a second operation (shown in a dashed and dotted line) by supplying the gas that has passed through the shift reactor 26 to the burner 22. The gas generated during the second operation, in which the temperature of the shift reactor 26 is higher than the preset temperature of the shift reactor 26, may contain sufficient hydrogen, so the combustion reaction for heating the reformer 23 can be performed if the gas is supplied to the burner 22. As the gas is supplied to the burner 22 from the shift reactor 26 in the second operation, it is possible to reduce the amount of fuel 50 supplied to the burner 22 or to stop the supply of fuel 50 to the burner 22, thereby saving the fuel 50. Meanwhile, if the temperature of the shift reactor 26 is higher than the preset temperature of the shift reactor 26 and the temperature of the stack 30 exceeds the proper operation temperature of the stack 30, the sixth valve 96 is closed and the normal operation (shown in a solid line) is performed by supplying the gas to the mixer 27.

When the normal operation is performed, the mixer 27 receives the gas generated from the shift reactor 26. The mixer 27 mixes the gas supplied from the shift reactor 26 with external air 66 according to a control signal of a controller (not shown). The gas mixed in the mixer 27 is supplied to the CO remover 29 when the stack 30 is a lower temperature type.

The CO remover 29 reduces the amount of CO through the preferential oxidation reaction such that the amount of CO is within an allowable range. The following reactions are performed in the CO remover 29.

CO + 0.5O₂ ↔ CO₂ + 47 kcal/mol

H₂ + 0.5O₂ ↔ H₂O + 68 kcal/mol

If the forward reaction is performed in the CO remover 29, CO is converted into CO₂, which means that the content of the CO is reduced. The content of CO is reduced to less than 10 ppm (part per million) as CO has passed through the CO remover 29. The CO remover 29 is necessary if the stack 30 is the low temperature type, but can be omitted if the stack 30 is a high temperature type which has endurance against CO. The reforming gas discharged from the CO remover 29 is supplied to the stack 30.

The stack 30 causes the electrochemical reaction to the reforming gas, thereby producing electric energy and thermal energy. The stack 30 performs the oxidation and reduction reaction and is prepared by stacking a plurality of single cells (not shown) capable of generating electricity. Although FIG. 2 schematically shows an anode 32, a cathode 34 and the cooling plate for the purpose of convenience, the anode 32 and the cathode 34 are disposed about the electrolyte layer (not shown) in the single cell and the cooling plate 36 is inserted between the single cells. In addition, end plates 38 are provided at left and right parts of the stack 30.

Electricity is generated from the anode 32 and the cathode 34 through the oxidation and reduction reaction of hydrogen. That is, the anode 32 dissolves hydrogen into a hydrogen ion and an electron by using a catalyst, thereby generating electricity and the cathode 34 combines the hydrogen ion with the electron, thereby producing water.

The cooling plate 36 is inserted between the anode 32 and the cathode 34 to control the temperature of the stack 30. That is, during the first and second operations of the initial operation, heat is transferred to the cooling plate 36 from the circulation heating circuit 71 and a heat medium of the cooling plate fluid path 72, thereby raising the temperature of the stack 30. In addition, during the normal operation, ninth and tenth valves 99 and 100 installed in a cooling liquid path 73 are frequently opened and closed under the control of the controller, thereby constantly maintaining the temperature of the stack 30.

The end plates 38 are provided at outermost portions of the left and right parts of the stack 30. The end plates 38 are formed with holes to allow the reforming gas to pass therethrough when the reforming gas is introduced into the stack 30. In addition, various types of fixing screws (not shown) can be screwed to the end plates 38 in order to fix unit cells (not shown). The end plates 38 support the weight of the stack 30 and keep the configuration of the stack 30. To this end, the end plates 38 are made from rigid metal, such as duralumin.

The circulation heating circuit 71 refers to a circulation system provided between the heat exchanger 24 and the cooling plate 36 of the stack 30. When the fuel cell system 10 is initially operated, water is naturally circulated through the circulation heating circuit 71 due to the thermosyphon phenomenon, thereby effectively and rapidly heating the cooling plate 36. Since the water is naturally circulated due to the thermosyphon phenomenon, an energy consuming circulation device, such as a pump, is not necessary so that energy consumption is reduced and the cost increase caused by an additional device can be prevented. The thermosyphon phenomenon refers to the two phase flow at a region subject to gravity. In detail, water serving as a heat medium is filled in the circulation heating circuit 71 and the liquid-phase water absorbs heat supplied from the burner 22 and the reformer 23 at the heat exchanger 24 serving as a heating unit so that the liquid-phase water is shifted into vapor-phase steam having the high temperature. As the liquid-phase water is shifted into vapor-phase steam, the volume of the heat medium is expanded and density thereof is reduced. The vapor-phase steam is transferred to the cooling plate 36, which is positioned relatively higher than the heat exchanger 24, through the circulation heating circuit 71. The cooling plate 36 serves as a condenser. The vapor-phase steam having the high-temperature is shifted into the liquid-phase water while passing through the cooling plate 36 by performing heat exchange with the stack 30, so that the volume is reduced and the density is increased. The liquid-phase water with increased density is transferred to the heat exchanger 24, which is disposed at a relatively lower position, due to the gravity. The liquid-phase water is shifted into the vapor-phase steam or vice versa through the repetition of the heating and cooling, so that the heat medium can naturally circulate through the circulation heating circuit 71 without the repulsive circulation device, thereby heating the stack 30. A fifth valve 95 is provided in the circulation heating circuit 71. The fifth valve 95 is open upon the second operation of the fuel cell system 10. The circulation of the heat medium caused by the thermosyphon phenomenon mainly occurs during the second operation in which the heat exchanger 24 has been sufficiently heated. The fifth valve 95 is closed when the temperature of the stack 30 exceeds the proper operation temperature of the stack 30. In this case, the circulation of the heat medium through the circulation heating circuit 71 may be stopped.

The cooling plate fluid path 72 supplies hot water, which is heated through the heat exchanger 24, to the cooling plate 36. When the first operation starts, the first valve 91 and a second valve 92 provided in the cooling plate fluid path 72 are open. The water 64 having the normal temperature is supplied to the heat exchanger 24 through the first valve 91. In the heat exchanger 24, the water 64 absorbs heat from the burner 22 and the reformer 23 so that the temperature of the water 64 is increased. Then, the water 64 is supplied to the cooling plate 36 through the second valve 92 so that the heat is transferred from the cooling plate 36 to the stack 30, thereby raising the temperature of the stack 30. Meanwhile, before the water 64 having the high temperature is supplied to the cooling plate 36, water stored in the cooling plate 36 of the stack 30 may be previously drained through a third valve 93. If the water stored in the cooling plate 36 of the stack 30 is previously drained, heat capacity of the stack 30 can be reduced, so that thermal energy of the hot water supplied to the stack 30 may be completely used to raise the temperature of the stack 30, so that the temperature of the stack 30 can be rapidly raised. In addition, even if ion conductivity of water existing in the cooling plate 36 rises above a reference level, the water stored in the cooling plate 36 can be drained. Further, in order to continuously raise the temperature of the stack 30 even if the water level in the cooling plate 36 has reached a target limit level, new water can be supplied to the cooling plate 36 while draining the hot water stored in the cooling plate 36 by controlling the first to third valves 91, 92 and 93.

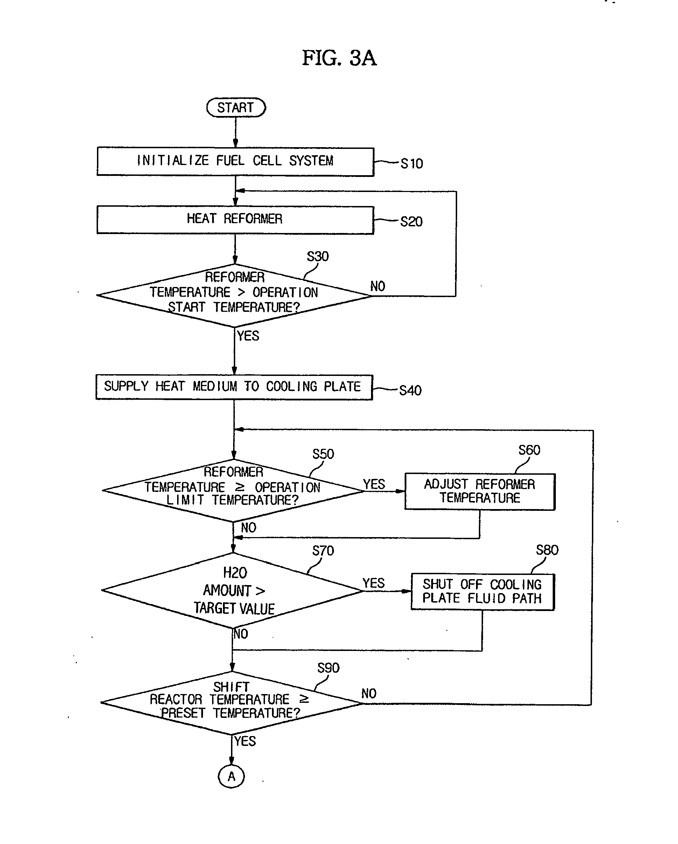

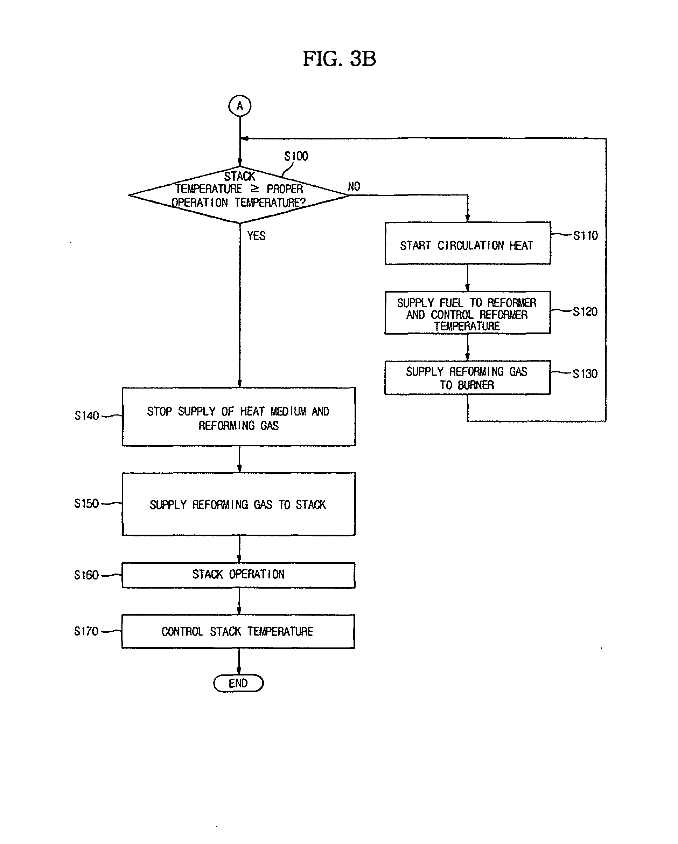

Hereinafter, the control method for the fuel cell system 10 according to the first embodiment of the present invention shown in FIG. 2 will be described with reference to FIGS. 3A and 3B.

When the fuel cell system 10 is initially operated, each component of the fuel cell system 10 is not within the normal temperature range to generate electric energy through an electrochemical reaction, so the fuel cell system 10 is initialized by shutting off various valves installed in the fuel cell system 10 (S10) and the burner 22 is operated to heat the reformer 23 (S20).

Then, it is determined whether the temperature of the reformer 23 reaches the operation start temperature of 300°C (S30).

If the temperature of the reformer 23 exceeds the operation start temperature, the first and second valves 91 and 92 provided in the cooling plate fluid path 72 are open to supply the heat medium (hot water) to the cooling plate 36 (S40). At this time, the water previously stored in the cooling plate 36 can be drained by opening the third valve 93 before the hot water is supplied to the cooling plate 36 through the first and second valves 91 and 92. In addition, the hot water can be discharged to the exterior through the cooling plate 36 while new hot water is supplied to the cooling plate 36. That is, in order to continuously raise the temperature of the stack 30 even if the water level in the cooling plate 36 has reached a target limit level, new hot water can be supplied to the cooling plate 36 while draining the hot water previously stored in the cooling plate 36 by controlling the first to third valves 91, 92 and 93. As the hot water is supplied to the cooling plate 36 through the cooling plate fluid path 72, the temperature of the cooling plate 36 rises, so that the temperature of the stack 30 also rises.

Since the burner 22 continuously heats the reformer 23, it is determined whether the temperature of the reformer 23 has reached the operation limit temperature of 500°C (S50).

If the temperature of the reformer 23 exceeds the operation limit temperature, the temperature of the reformer 23 is adjusted by controlling the fourth valve 94 provided in the fluid path that serves to supply the water 64 to the reformer 23 (S60). As the water 64 having the normal temperature is supplied to the reformer 23, the temperature of the reformer 23 is lowered. If the water 64 being supplied to the reformer 23 is shut off, the temperature of the reformer 23 rises again due to heat generated from the burner 22.

Then, the amount of water stored in the cooling plate 36 is compared with the target limit value thereof (S70).

If the amount of water stored in the cooling plate 36 exceeds the target limit value, the first valve 91 is shut off so as to constantly maintain the amount of water stored in the cooling plate 36 (S80). As mentioned above, even if the water level in the cooling plate 36 has reached the target limit value, new hot water can be supplied to the cooling plate 36 while draining the hot water previously stored in the cooling plate 36 by controlling the first to third valves 91, 92 and 93 in order to continuously raise the temperature of the stack 30.

Then, it is determined whether the temperature of the shift reactor 26 is higher than the preset temperature of the shift reactor (S90). Since the reformer 23 is directly heated by the burner 22, the temperature of the reformer 23 is raised at a relatively high speed. In contrast, the shift reactor 26 is indirectly heated by heat generated from the reformer 23 or steam heated by the reformer 23, so that the temperature of the shift reactor 26 is lower than the temperature of the reformer 23 and is raised at a relatively low speed. Since the temperature of the shift reactor 26 is raised at the relatively low speed as compared with the temperature of the reformer 23, the temperature of the shift reactor 26 may not reach the preset temperature of 100°C, which is the relatively low temperature, even if the temperature of the reformer 23 has reached the operation limit temperature of 500°C, which is the relatively high temperature.

If the temperature of the shift reactor 26 is higher than the preset temperature of the shift reactor 26, the fuel cell system 10 is subject to the second operation of the initial operation. That is, it is determined whether the temperature of the stack 30 reaches the proper operation temperature of the stack 30 enabling the normal operation of the stack 30 (S100). The proper operation temperature of the stack 30 may vary depending on the type of the stack 30, that is, the high temperature type and the low temperature type.

If the temperature of the stack 30 is lower than the proper operation temperature of the stack 30, the first valve 91 is closed and the fifth valve 95 is open. As mentioned above, the fifth valve 95 is provided in the circulation heating circuit 71 (S110). Although the fifth valve 95 can be open during the first operation, the internal temperature of the circulation heating circuit 71 may be insufficient to activate the thermosyphon phenomenon. However, if the temperature of the shift reactor 26 exceeds the preset temperature of the shift reactor 26 suitable for the second operation, the internal temperature of the circulation heating circuit 71 may rise above the boiling point of water suitable to activate the thermosyphon phenomenon. Thus, if the temperature of the stack 30 is lower than the proper operation temperature of the stack 30, the fifth valve 95 is open to activate the thermosyphon phenomenon, thereby heating the stack 30. Due to the thermosyphon phenomenon, heat can be transferred to the stack 30 through natural convection according to a temperature difference without using an additional pressing device, such as a pump, so that the temperature of the stack 30 can be effectively and rapidly raised. In order to facilitate the natural convection, a repulsive circulation device can be added to the fuel cell system 10. In this case, the size and energy consumption of the repulsive circulation device can be reduced as compared with the case where the thermosyphon phenomenon is not employed.

After opening the fifth valve 95, the fuel 50 is supplied to the reformer 23 and the temperature of the reformer 23 is adjusted by controlling the fifth valve 94 (S120). The fuel 50 is desulfurized while passing through the desulfurizer 62 and then supplied to the reformer 23. In addition, the water 64 is supplied to the reformer 23 through the fourth valve 94. If the water 64 and the desulfurized fuel 50 are supplied to the reformer 23, the reforming reaction is performed in the reformer 23 while generating gas. The gas generated through the reforming reaction is supplied to the shift reactor 26 by passing through the heat exchanger 24. At this time, since the temperature of the shift reactor 26 exceeds the preset temperature suitable for removing CO, the gas that has passed through the shift rector 26 may have CO less than a predetermined level.

As the gas is generated from the shift reactor 26, the sixth valve 96 is open to supply the gas to the burner 22 (S130). At this time, since the temperature of the stack 30 is lower than the proper operation temperature of the stack 30, the stack 30 may not be properly operated. Thus, the gas generated from the shift reactor 26 is not supplied to the stack 30, but is supplied to the burner 22. Since the gas generated from the shift reactor 26 is supplied to the burner 22, the amount of the fuel 50 can be reduced or the supply of the fuel 50 can be stopped, so that the fuel cell system 10 can be economically managed.

If the temperature of the stack 30 is less than the proper operation temperature of the stack 30, the fuel cell system 10 is subject to the normal operation.

The normal operation of the fuel cell system 10 may start by shutting off the fourth to sixth valves 94, 95 and 96 (S140). If the fifth valve 95 is shut off, the fluid flowing in the circulation heating circuit 71 is blocked, so that the thermosyphon phenomenon may stop. Thus, heat may not be transferred to the stack 30 through the circulation heating circuit 71. If the fourth valve 94 is shut off, the direct supply of the water 64 to the reformer 23 is stopped. Since the fourth valve 94, which allows the water 64 having the normal temperature to be directly supplied to the reformer 23, is shut off, the reformer 23 may not be subject to sudden temperature variation even if there is temperature difference between the water 64 having the normal temperature and the reformer 23 having the high temperature. If the sixth valve 96 is shut off, the gas generated from the shift reactor 26 is not supplied to the burner 22.

After shutting off the fourth to sixth valves 94, 95 and 96, the second valve 92 is shut off and the first, seventh and eights valves 91, 97 and 98 are open (S150) to supply reforming gas to the stack. If the first valve 91 is open, the temperature of the water 64 is raised while passing through the heat exchanger 24. The seventh valve 97 is provided in the fluid path that serves to supply the water 64 having the increased temperature to the reformer 23. Since the first and seventh valves 91 and 97 are open in a state in which the second and fourth valves 92 and 94 have been shut off, the reformer 23 receives heated water 64 instead of the water having the normal temperature, so that sudden temperature variation of the reformer 23 may not occur. If the eighth valve 98 is open, reforming gas that has passed through the CO remover 29 is supplied to the stack 30. The gas generated from the shift reactor 26 is mixed with the external air 66 so that mixed gas is supplied to the CO remover 29. The CO remover 29 is necessary when the stack 30 is the low temperature type.

If the reforming gas is supplied through the eighth valve 98, the stack 30 is operated (S160).

As the stack 30 operates, the ninth and tenth valves 99 and 100 are open and closed according to the control signal of the controller to maintain the temperature of the stack 30 within a proper range (S170). The ninth and tenth valves 99 and 100 are provided in the cooling liquid path 73. In addition, the stack 30 generates electric energy with a great amount of heat. Thus, the stack 30 may not be normally operated if the heat is not effectively dissipated. For this reason, cooling liquid is supplied to the cooling plate 36 through the cooling liquid path 73 communicated with a cooling liquid reservoir 40 to adjust the temperature of the stack 30. As mentioned above, the ninth and tenth valves 99 and 100 are provided in the cooling liquid path 73 to adjust the amount of the cooling liquid such that the stack 30 can be operated within a proper temperature range.

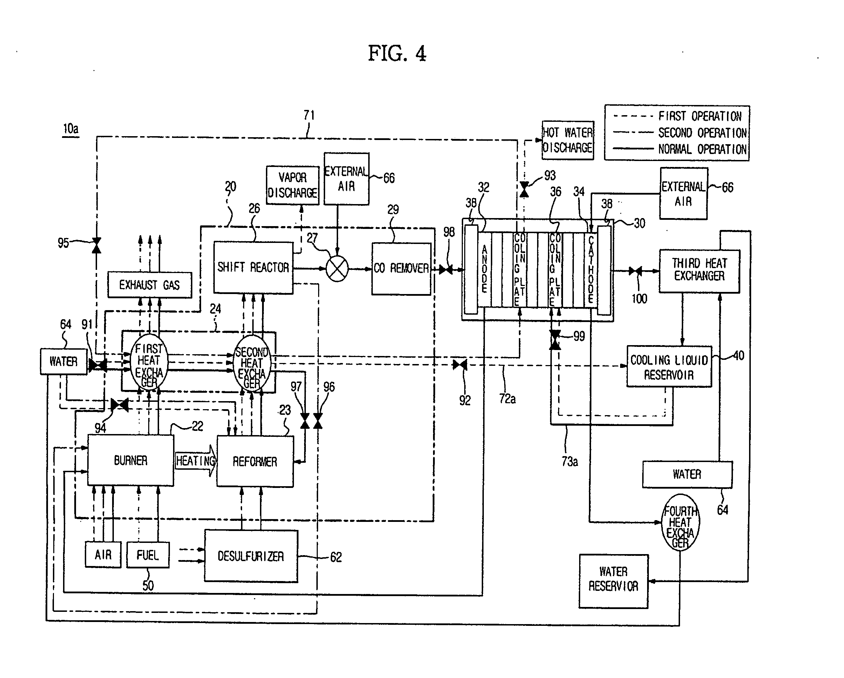

FIG. 4 is a schematic view showing the structure of a fuel cell system according to a second embodiment of the present invention. The following description will be focused on the structure and elements different from those of the first embodiment and the like reference numerals will be used to refer to the like elements. In addition, modified elements will be denoted with reference marks "a".

The fuel cell system 10a according to the second embodiment of the present invention includes a cooling plate fluid path 72a directly connected to the cooling liquid reservoir 40.

Since the cooling plate fluid path 72a is directly connected to the cooling liquid reservoir 40, the ninth valve 99 is open as the first operation starts, so that the hot water of the cooling liquid reservoir 40 is supplied to the cooling plate 36 through the cooling liquid path 73a. According to the second embodiment, similar to the first embodiment, the cooling liquid can be drained or exchanged upon the initial operation of the fuel cell system 10a through the third valve 93 or a valve (not shown) provided in the cooling liquid path 73a.

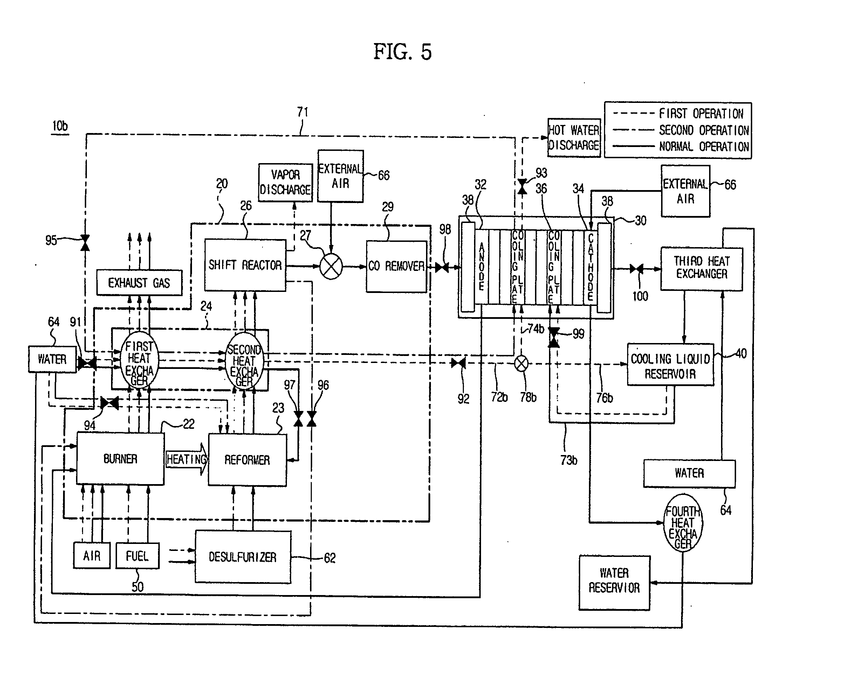

FIG. 5 is a schematic view showing the structure of a fuel cell system according to a third embodiment of the present invention. The following description will be focused on the structure and elements different from those of the first embodiment and the like reference numerals will be used to refer to the like elements. In addition, modified elements will be denoted with reference marks "b".

The fuel cell system 10b according to the third embodiment of the present invention includes a cooling plate fluid path 72b, which branches into a first cooling plate fluid path 74b and a second cooling plate fluid path 76b at a separator 78b.

The first cooling plate fluid path 74b serves to directly supply water to the cooling plate 36 to raise the temperature of the stack 30, and the second cooling plate fluid path 76b serves to supply the water from the cooling liquid reservoir 40 to the cooling plate 36 through the cooling liquid path 73b to raise the temperature of the stack 30.

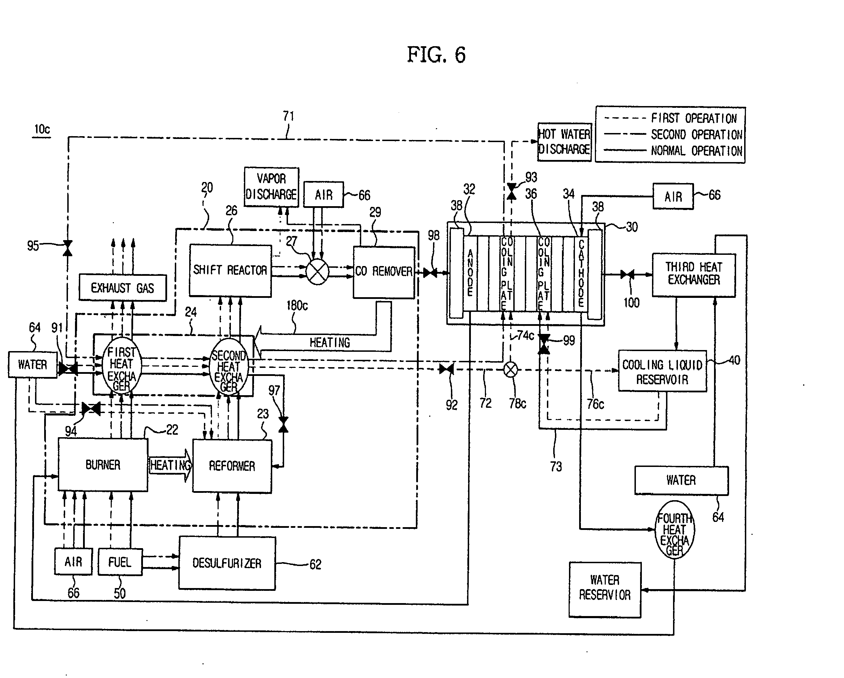

FIG. 6 is a schematic view showing the structure of a fuel cell system according to a fourth embodiment of the present invention. The following description will be focused on the structure and elements different from those of the first embodiment and the like reference numerals will be used to refer to the like elements. In addition, modified elements will be denoted with reference marks "c".

The fuel cell system 10c according to the fourth embodiment of the present invention includes a heat supply path 180c provided between the CO remover of the fuel processor 20 and the heat exchanger 24.

As the reforming reaction is performed, the gas generated from the reformer 23 is supplied to the CO remover 29 through the shift reactor 26 and the mixer 27.

When the second operation of the initial operation and the normal operation are performed, the gas generated from the shift reactor 26 is supplied to the mixer 27.

The mixer 27 mixes the gas supplied from the shift reactor 26 with the external air 66 according to the control signal of the controller. The mixed gas is supplied to the CO remover 29.

In the second operation state, in which the temperature of the stack 30 does not reach the proper operation temperature of the stack 30, the electrochemical reaction is performed in the CO remover 29. In addition, perfect combustion may occur by adjusting the amount of air supplied to the mixer 27 and thermal energy generated from the CO remover 29 is transferred to the heat exchanger 24. The thermal energy refers to heat of reaction generated when the electrochemical reaction is performed in the forward direction. The forward reaction performed in the CO remover 29 is an exothermic reaction during which a great amount of thermal energy is generated. The CO and water generated during the exothermic reaction are drained to the exterior. In addition, the thermal energy is supplied to the heat exchanger 24 through the heat supply path 180c. According to the present embodiment, the heat supply path 180c is provided between the CO remover 29 and the heat exchanger 24. However, if the CO remover 29 makes surface-contact with an outer portion of the heat exchanger 24, the thermal energy can be directly supplied from the CO remover 29 to the heat exchanger 24, so that an additional heat supply path may not be required. Meanwhile, in the normal operation state, the reforming gas discharged from the CO remover 29 is supplied to the stack 30.

The cooling plate fluid path 72 branches into a first cooling plate fluid path 74c and a second cooling plate fluid path 76c at a separator 78c. The separator 78c can supply the heated water 64 through one of the first cooling plate fluid path 74c and the second cooling plate fluid path 76c or through both of the first cooling plate fluid path 74c and the second cooling plate fluid path 76c according to the control signal of the controller. The first cooling plate fluid path 74c serves to directly supply the hot water to the cooling plate 36 and the second cooling plate fluid path 76c supplies hot water to the cooling liquid reservoir 40. The hot water of the cooling liquid reservoir 40 is supplied to the cooling plate 36 through the cooling liquid path 73 depending on the status of the ninth valve 99 which is open or closed under the control of the controller. Thermal energy is transferred to the stack 30 by the hot water 64 supplied to the cooling plate 36 through the first and second cooling plate fluid paths 74c and 76c, thereby raising the temperature of the stack 30.

Although the above embodiments have been described in relation to the low temperature type stack employing the CO remover, the CO remover can be omitted according to the type of the stack and characteristics of each component of the fuel cell system.

In addition, although the above embodiments have been described in that the CO remover and the reformer simultaneously heat the stack, it is also possible to heat the stack by selectively using the CO remover or the reformer.

Although few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of controlling a fuel cell system (10) including a fuel processor (20) to generate reforming gas and a stack (30) to generate energy by receiving the reforming gas from the fuel processor, the method comprising:
performing an initial operation, comprising operating the fuel processor to generate thermal energy, heating a heat medium by the generated thermal energy, and raising a temperature of the stack to a normal operation temperature comprising heating the heat medium to a high temperature wherein performing the initial operation comprises:
supplying the heat medium having the high temperature to the stack; and
heating the stack comprising circulating the heat medium through a circulation heating circuit (71) provided between the fuel processor and the stack;
stopping the supplying the heat medium and starting the heating the stack if a temperature of a shift reactor (26) provided in the fuel processor reaches a preset temperature; and
performing a normal operation, comprising supplying the reforming gas to the stack after the temperature of the stack has reached the normal operation temperature.

2. The method as claimed in claim 1, wherein the supplying the heat medium having the high temperature comprises directly supplying the heat medium to a cooling plate of the stack.

3. The method as claimed in claim 1, wherein the supplying the heat medium having the high temperature comprises supplying the heat medium to a cooling plate of the stack through a cooling liquid reservoir provided in the stack.

4. The method as claimed in claim 1, wherein the supplying comprises simultaneously supplying the heat medium to a cooling plate of the stack and providing a cooling liquid reservoir.

5. The method as claimed in claim 1, further comprising passing the heat medium through a heat exchanger of the fuel processor such that the heat medium is heated and then supplying the heat medium to the stack in the first operation after a temperature of a reformer provided in the fuel processor has reached an operation start temperature.

6. The method as claimed in claim 1, wherein the circulating comprises repulsively circulating the heat medium through the circulation heating circuit.

7. The method as claimed in claim 1, wherein the circulating comprises circulating the heat medium through the circulation heating circuit due to thermosyphon phenomenon.

8. The method as claimed in claim 1, further comprising supplying fuel to the fuel processor, generating reforming gas from the supplied fuel and supplying the generated reforming gas to a burner of the fuel processor.

9. The method as claimed in claim 8, further comprising supplying the reforming gas to the stack after stopping the raising the temperature of the stack and supplying the reforming gas to the burner if a temperature of the stack exceeds a normal operation temperature of the stack.

10. The method as claimed in claim 1, further comprising providing the fuel processor with a reformer, and supplying the heat medium having a normal temperature to the reformer to adjust a temperature of the reformer when the temperature of the reformer is higher than an operation limit temperature of the reformer in performing the initial operation.

11. The method as claimed in claim 1, further comprising providing the fuel processor with a reformer, and supplying the heat medium heated through a heat exchanger of the fuel processor to the reformer to adjust a temperature of the reformer when the temperature of the reformer is higher than an operation limit temperature of the reformer in performing the normal operation.

12. The method as claimed in claim 1, wherein the fuel processor includes a reformer, a carbon monoxide (CO) remover, and a shift reactor, the method further comprising heating the heat medium by at least one of thermal energy generated from the reformer and a thermal energy generated from the CO remover.

13. The method as claimed in claim 12, further comprising supplying gas generated from the reformer and the shift reactor to the CO remover together with air to operate the CO remover, and supplying thermal energy generated from the CO remover to a heat exchanger of the fuel processor.

## Patentansprüche

1. Verfahren zum Steuern eines Brennstoffzellensystems (10), das einen Brennstoffprozessor (20) zum Erzeugen von Reformer-Gas und einen Stapel (30) zum Erzeugen von Energie durch Aufnehmen des Reformer-Gases von dem Brennstoffprozessor beinhaltet, wobei das Verfahren umfasst:
Durchführen eines Anfangsbetriebes, umfassend ein Betreiben des Brennstoffprozessors zum Erzeugen von thermischer Energie, ein Erwärmen eines Wärmemediums durch die erzeugte thermische Energie und ein Anheben einer Temperatur des Stapels auf eine Normalbetriebstemperatur, umfassend ein Erwärmen des Wärmemediums auf eine hohe Temperatur, wobei das Durchführen des Anfangsbetriebes umfasst:
Zuleiten des Wärmemediums mit der hohen Temperatur zu dem Stapel; und
Erwärmen des Stapels, umfassend ein Zirkulieren des Wärmemediums durch einen Zirkulationserwärmungskreislauf (71), der zwischen dem Brennstoffprozessor und dem Stapel vorgesehen ist;
Anhalten des Zuleitens des Wärmemediums und Beginnen des Erwärmens des Stapels, wenn eine Temperatur eines Shift-Reaktors (26), der in dem Brennstoffprozessor vorgesehen ist, eine voreingestellte Temperatur erreicht; und
Durchführen eines Normalbetriebes, umfassend ein Zuleiten des Reformer-Gases zu dem Stapel, nachdem die Temperatur des Stapels die Normalbetriebstemperatur erreicht hat.

2. Verfahren nach Anspruch 1, wobei das Zuleiten des Wärmemediums mit der hohen Temperatur ein direktes Zuleiten des Wärmemediums zu einer Kühlplatte des Stapels umfasst.

3. Verfahren nach Anspruch 1, wobei das Zuleiten des Wärmemediums mit der hohen Temperatur ein Zuleiten des Wärmemediums zu einer Kühlplatte des Stapels durch ein Kühlflüssigkeitsreservoir, das in dem Stapel vorgesehen ist, umfasst.

4. Verfahren nach Anspruch 1, wobei das Zuleiten ein gleichzeitiges Zuleiten des Wärmemediums zu einer Kühlplatte des Stapels und ein Bereitstellen eines Kühlflüssigkeitsreservoirs umfasst.

5. Verfahren nach Anspruch 1, des Weiteren umfassend ein Leiten des Wärmemediums durch einen Wärmetauscher des Brennstoffprozessors derart, dass das Wärmemedium erwärmt wird, und sodann ein Zuleiten des Wärmemediums zu dem Stapel in dem ersten Betrieb, nachdem eine Temperatur eines Reformers, der in dem Brennstoffprozessor vorgesehen ist, eine Betriebsanfangstemperatur erreicht hat.

6. Verfahren nach Anspruch 1, wobei das Zirkulieren ein repulsives Zirkulieren des Wärmemediums durch den Zirkulationserwärmungskreislauf umfasst.

7. Verfahren nach Anspruch 1, wobei das Zirkulieren ein Zirkulieren des Wärmemediums durch die Zirkulationserwärmungskreislauf infolge des Thermosyphon-Phänomens umfasst.

8. Verfahren nach Anspruch 1, des Weiteren umfassend ein Zuleiten von Brennstoff zu dem Brennstoffprozessor, ein Erzeugen von Reformer-Gas aus dem zugeleiteten Brennstoff und ein Zuleiten des erzeugten Reformer-Gases zu einem Brenner des Brennstoffprozessors.

9. Verfahren nach Anspruch 8, des Weiteren umfassend ein Zuleiten des Reformer-Gases zu dem Stapel nach Anhalten des Anhebens der Temperatur des Stapels und ein Zuleiten des Reformer-Gases zu dem Brenner, wenn eine Temperatur des Stapels eine Normalbetriebstemperatur des Stapels übersteigt.

10. Verfahren nach Anspruch 1, des Weiteren umfassend ein Bereitstellen des Brennstoffprozessors mit einem Reformer und ein Zuleiten des Wärmemediums mit einer Normaltemperatur zu dem Reformer zum Anpassen einer Temperatur des Reformers, wenn die Temperatur des Reformers höher als eine Betriebsgrenztemperatur des Reformers beim Durchführen des Anfangsbetriebes ist.

11. Verfahren nach Anspruch 1, des Weiteren umfassend ein Bereitstellen des Brennstoffprozessors mit einem Reformer und ein Zuleiten des Wärmemediums, das durch einen Wärmetauscher des Brennstoffprozessors erwärmt wird, zu dem Reformer zum Anpassen einer Temperatur des Reformers, wenn die Temperatur des Reformers höher als eine Betriebsgrenztemperatur des Reformers beim Durchführen des Normalbetriebes ist.

12. Verfahren nach Anspruch 1, wobei der Brennstoffprozessor einen Reformer, einen CO-Entferner (Kohlenmonoxid CO) und einen Shift-Reaktor beinhaltet, wobei das Verfahren des Weiteren ein Erwärmen des Wärmemediums durch wenigstens eines von thermischer Energie, die von dem Reformer erzeugt wird, und einer thermischen Energie, die von dem CO-Entferner erzeugt wird, umfasst.

13. Verfahren nach Anspruch 12, des Weiteren umfassend ein Zuleiten von Gas, das von dem Reformer und dem Shift-Reaktor erzeugt wird, zu dem CO-Entferner zusammen mit Luft zum Betreiben des CO-Entferners und ein Zuleiten von thermischer Energie, die von dem CO-Entferner erzeugt wird, zu einem Wärmetauscher des Brennstoffprozessors.

## Revendications

1. Procédé de commande d'un système de pile à combustible (10) incluant un processeur de combustible (20) destiné à générer un gaz de reformage et un empilement (30) destiné à générer de l'énergie par réception du gaz de reformage provenant du processeur de combustible, le procédé comprenant :
l'exécution d'une opération initiale, comprenant l'actionnement du processeur de combustible pour générer de l'énergie thermique, le chauffage d'un milieu thermique par l'énergie thermique générée et l'élévation de température de l'empilement jusqu'à une température normale de fonctionnement, comprenant le chauffage du milieu thermique jusqu'à une température haute, dans lequel l'exécution de l'opération initiale comprend :
la fourniture à l'empilement du milieu thermique ayant la température haute ; et
le chauffage de l'empilement comprenant la circulation du milieu thermique à travers un circuit de chauffage de circulation (71) prévu entre le processeur de combustible et l'empilement ;
l'arrêt de la fourniture du milieu thermique et le démarrage du chauffage de l'empilement si la température d'un réacteur de transformation (26) prévu dans le processeur de combustible atteint une température fixée à l'avance ; et
l'exécution du fonctionnement normal, comprenant la fourniture du gaz de reformage à l'empilement, après que la température de l'empilement a atteint la température normale de fonctionnement.

2. Procédé selon la revendication 1, dans lequel la fourniture du milieu thermique ayant la température haute comprend la fourniture directe du milieu thermique à une plaque de refroidissement de l'empilement.

3. Procédé selon la revendication 1, dans lequel la fourniture du milieu thermique ayant la température haute comprend la fourniture du milieu thermique à une plaque de refroidissement de l'empilement par l'intermédiaire d'un réservoir de liquide de refroidissement prévu dans l'empilement.

4. Procédé selon la revendication 1, dans lequel la fourniture comprend la fourniture simultanée du milieu thermique à une plaque de refroidissement de l'empilement et la fourniture d'un réservoir de liquide de refroidissement.

5. Procédé selon la revendication 1, comprenant en outre le passage du milieu thermique à travers un échangeur de chaleur du processeur de combustible de telle sorte que le milieu thermique soit chauffé, puis la fourniture du milieu thermique à l'empilement lors de la première opération après que la température d'un reformeur prévu dans le processeur de combustible a atteint une température de démarrage de fonctionnement.

6. Procédé selon la revendication 1, dans lequel la circulation comprend la circulation répulsive du milieu de chauffage à travers le circuit de chauffage de circulation.

7. Procédé selon la revendication 1, dans lequel la circulation comprend la circulation du milieu thermique à travers le circuit de chauffage de circulation due au phénomène de thermosiphon.

8. Procédé selon la revendication 1, comprenant en outre la fourniture de combustible au processeur de combustible, la génération du gaz de reformage à partir du combustible fourni et la fourniture du gaz de reformage généré à un brûleur du processeur de combustible.

9. Procédé selon la revendication 8, comprenant en outre la fourniture du gaz de reformage à l'empilement après avoir arrêté l'élévation de la température de l'empilement et la fourniture du gaz de reformage au brûleur si la température de l'empilement dépasse la température normale de fonctionnement de l'empilement.

10. Procédé selon la revendication 1, comprenant en outre la fourniture au processeur de combustible d'un reformeur et la fourniture du milieu thermique ayant une température normale au reformeur pour régler la température du reformeur lorsque la température du reformeur est supérieure à la température limite de fonctionnement du reformeur pendant l'exécution de l'opération initiale.

11. Procédé selon la revendication 1, comprenant en outre la fourniture d'un reformeur au processeur de combustible et la fourniture au reformeur du milieu thermique chauffé par l'intermédiaire d'un échangeur de chaleur du processeur de combustible pour régler la température du reformeur lorsque la température du reformeur est supérieure à la température limite de fonctionnement du reformeur pendant l'exécution de l'opération normale.

12. Procédé selon la revendication 1, dans lequel le processeur de combustible comporte un reformeur, un éliminateur de monoxyde de carbone (CO), et un réacteur de transformation, le procédé comprenant en outre le chauffage du milieu thermique par au moins une énergie parmi l'énergie thermique générée par le reformeur et l'énergie thermique générée par l'éliminateur de CO.

13. Procédé selon la revendication 12, comprenant en outre la fourniture de gaz généré par le reformeur et le réacteur de transformation à l'éliminateur de CO avec l'air pour faire fonctionner l'éliminateur de CO, et la fourniture de l'énergie thermique générée par l'éliminateur de CO à un échangeur de chaleur du processeur de combustible.
